Europäisches Patentamt

European Patent Office

Office européen des brevets

(19)

(11) Veröffentlichungsnummer: **0 458 232 A2**

## (12) EUROPÄISCHE PATENTANMELDUNG

(21) Anmeldenummer: **91108116.4**

(22) Anmeldetag: **18.05.91**

(51) Int. Cl.5: **H02J 7/00**, G01R 31/36, F21L 1/00

(30) Priorität: **25.05.90 DE 4016936**

(43) Veröffentlichungstag der Anmeldung:
**27.11.91 Patentblatt 91/48**

(84) Benannte Vertragsstaaten:
**AT DE FR GB NL SE**

(71) Anmelder: **ABB CEAG Licht- und Stromversorgungstechnik GmbH Senator-Schwarz-Ring 26 W-4770 Soest(DE)**

(72) Erfinder: **Scharfenberg, Manfred Hallohweg 81 W-4750 Unna-Alferde(DE)**
Erfinder: **Griewel, Horst-Hubert Kirchnerstrasse 13 W-4760 Werl-Büderich(DE)**

(74) Vertreter: **Rupprecht, Klaus, Dipl.-Ing. et al c/o Asea Brown Boveri Aktiengesellschaft Zentralbereich Patente Postfach 100351 W-6800 Mannheim 1(DE)**

(54) **Steuerungs- und Messeinrichtung für mobile batteriebetriebene Geräte.**

(57) Die Erfindung bezieht sich auf eine Steuerungs- und Meßeinrichtung für mobile batteriebetriebene Geräte, insbesondere tragbare Leuchten. Es wird vorgeschlagen, die Steuerungs- und Meßeinrichtung als kompaktes Modul (10) mit einem Mikrocontroller (9) zu realisieren, womit unter anderem Informationen über die zu erwartende Verfügbarkeit des Gerätes ermittelt und zur Anzeige gebracht werden können.

Fig 1

EP 0 458 232 A2

Die Erfindung bezieht sich auf eine Steuerungs- und Meßeinrichtung für mobile batteriebetriebene Geräte.

Ein batteriebetriebenes Gerät ist beispielsweise eine Handleuchte, wie in der ABB CEAG-Druckschrift "Ex-Handscheinwerfer SE5 LK nach EN" beschrieben. Steuerungseinrichtungen sind in solchen Geräten u.a. zur Steuerung der Ladeeinrichtung für die Akkumulatorenbatterie vorhanden, wobei die Ladung nach einer vom Akkumulatortyp abhängigen Ladecharakteristik und in Abhängigkeit von der Restkapazität der Batterie erfolgt. Meßeinrichtungen sind vorhanden zur Feststellung der Restkapazität der Batterie. Außerdem sind an der bekannten Handleuchte Anzeigeeinrichtungen für die Restkapazität vorhanden, wobei die Anzeige grob nach drei Bereichen der Restkapazität unterscheidet. Nach Unterschreiten einer Untergrenze der Batteriekapazität wird umgeschaltet von einer Hauptlampe auf eine Glühlampe mit kleinerer Leistung um die Betriebsdauer zu verlängern. Unter "Kapazität der Batterie" wird hier nicht die Speicherfähigkeit der Batterie verstanden, sondern die entnehmbare Energiemenge je nach Ladezustand.

In manchen Anwendungsfällen werden genauere und/oder zusätzliche Informationen über die vorhersehbare Verfügbarkeit des batteriebetriebenen Gerätes gewünscht.

Der Erfindung liegt deshalb die Aufgabe zugrunde, eine Steuerungs- und Meßeinrichtung anzugeben, mit welcher detailliertere Informationen über den Zustand eines damit ausgerüsteten batteriebetriebenen Gerätes ermöglicht werden, zumindest über den Ladezustand seiner Batterie.

Diese Aufgabe wird durch eine Steuerungs- und Meßeinrichtung für mobile batteriebetrienene Geräte gelöst, welche als Modul mit einem Mikrocontroller ausgeführt ist, wobei dem Mikrocontroller der Batteriespannung, dem Batteriestrom und der Batterietemperatur proportionale Spannungssignale zugeführt sind, und im Mikrocontroller Programme gespeichert sind zur Ermittlung des jeweiligen Ladezustandes und zur Steuerung eines Ladegeräts gemäß einer bestimmten Ladecharakteristik und in Abhängigkeit vom Ladezustand und der Mikrocontroller Steuerungssignale für ein Ladegerät ausgibt.

Das vorgeschlagene Modul für batteriebetriebene mobile Geräte hat den Vorteil, daß es sehr kompakt ausgeführt und kostengünstig hergestellt werden kann. Durch entsprechende Programmierung und Parametrisierung sowie durch ergänzende Hardware-Komponenten kann eine Anpassung an unterschiedliche Anforderungen erfolgen. Bevorzugte Ausgestaltungen sind in Unteransprüchen angegeben. Eine ausführlichere Beschreibung der Erfindung erfolgt nachstehend anhand eines in der Zeichnung dargestellten Ausführungsbeispiels.

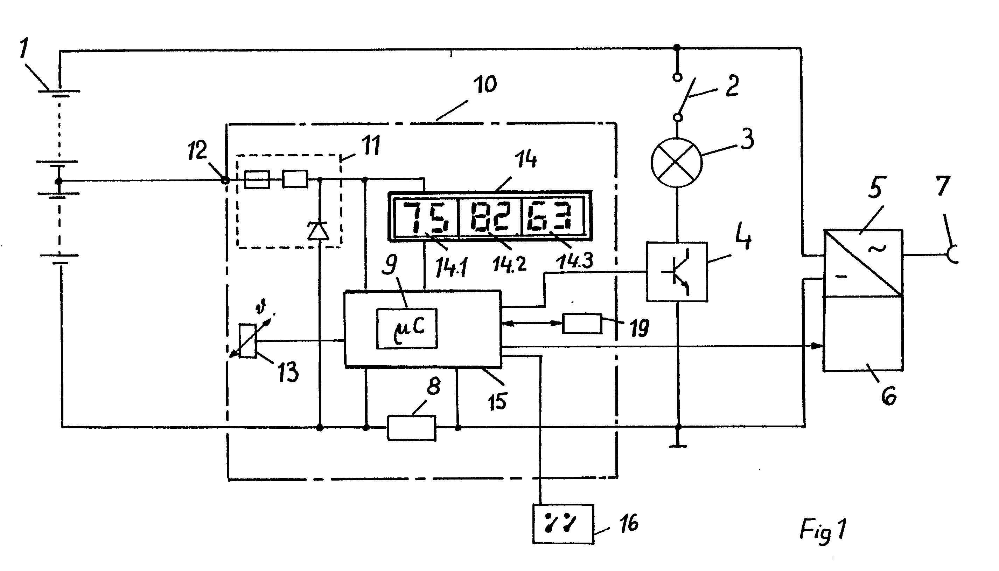

Die Fig. 1 der Zeichnung zeigt ein Schaltungsschema für eine tragbare Leuchte, wobei ein erfindungsgemäßes Steuerungs- und Meßmodul einschließlich einer Anzeigeeinrichtung eingesetzt ist.

Die Leuchte enthält eine Akkumulatorenbatterie 1, welche nach Betätigung eines Schalters 2 eine Glühlampe 3 speist. In Reihe mit der Lampe 3 ist ein steuerbarer Schalter 4 geschaltet, mit welchem die Lampe 3 bei Batterieunterspannung abgeschaltet werden kann, um eine Tiefentladung der Batterie 1 zu vermeiden. Die Batterie 1 kann von einer Ladeeinrichtung, die aus einem Leistungsteil 5 und einer Ladesteuerung 6 besteht, über einen Netzanschluß 7 geladen werden. Sowohl der Ladestrom zur Ladung der Batterie als auch ein Entladestrom zur Speisung der Lampe 3 fließen durch einen Meßwiderstand (Shunt) 8, an welchem eine dem Strom proportionale Spannung abgegriffen und einem Mikrocontroller 9 zugeführt wird. Der Mikrocontroller 9 enthält einen Mikroprozessor und mehrere A/D-Umsetzer zur Digitalisierung analoger Eingangssignale. Der Mikrocontroller 9 ist ein Grundbaustein einer als Modul 10 ausgeführten Steuerungs- und Meßeinrichtung. Das Modul 10 enthält neben dem Mikrocontroller 9 und dem Meßwiderstand 8 noch eine Schutzbeschaltung 11 am Batteriespannungseingang 12 und eine Interface-Einrichtung 15 zur Pegelanpassung oder Signalverstärkung oder zur seriellen Datenübertragung sowie einen Anschluß für eine Einrichtung 16 zur Programmierung oder Parametrisierung und Rücksetzung des Mikrocontrollers 9. Weiterhin enthält das Modul 10 einen Temperaturfühler 13 zur Eingabe eines Temperaturmeßsignals in den Mikrocontroller 9. Ausgänge des Mikrocontrollers 9 bzw. der Interface-Einrichtung 15 sind mit dem steuerbaren Schalter 4 und der Ladesteuerung 6 verbunden. Außerdem enthält das Modul 10 eine Anzeigeeinrichtung 14 mit drei Anzeigefeldern 14.1 bis 14.3, welche vom Mikrocontroller 9 angesteuert wird. Das Modul 10 läßt sich beispielsweise als Platine mit dem Mikrocontroller 9 und weiteren oberflächenmontierten Bauelementen und einer als Flüssigkeitsanzeige oder Leuchtziffernanzeige ausgeführten Anzeigeeinrichtung realisieren. Schließlich enthält das Modul 10 einen mit dem Mikrocontroller 9 verbundenen Langzeit-Datenspeicher 19. Das Modul 10 wird vorzugsweise sehr kompakt aufgebaut, um ein breites Anwendungsspektrum zu ermöglichen; und kann als physikalische Einheit mit der Batterie 1 betrachtet werden.

Die schematisch dargestellte Anordnung läßt sich erweitern um weitere Funktionen, wie z.B. eine Alarmmeldung, einen Anschluß mehrerer Verbraucher oder Selbsteichung der Meßsysteme, und Selbstüberprüfung der Einrichtung zu ermöglichen.

Mit dem Mikrocontroller 9 wird eine Vielzahl von Funktionen realisiert, wie nachstehend beschrieben ist. Der Mikrocontroller 9 enthält dazu die erforderlichen Programme und Parameterwerte.

Der Mikrocontroller 9 enthält eine Einrichtung zur Zeitmessung, also eine Uhr. Durch Verknüpfung der Ladezeit mit dem Ladestrom wird die als Kapazität bezeichnete gespeicherte Energiemenge ermittelt. In gleicher Weise wird die vom Verbraucher entnommene Energiemenge erfaßt, so daß sich durch Subtraktion die mit Restkapazität bezeichnete augenblickliche Kapazität ermitteln läßt. Lade- und Entladewirkungsgrade, Selbstentladung der Batterie sowie Energieverbrauch der Steuer- und Meßeinrichtung werden bei der Kapazitätsberechnung berücksichtigt. Die ermittelte Restkapazität wird in Prozent der verfügbaren Kapazität bei Volladung im ersten Anzeigefeld 14.1 der Anzeigeeinrichtung 14 angezeigt. Sie wird außerdem genutzt zur Steuerung des steuerbaren Schalters 4 um eine unerwünschte Tiefentladung zu vermeiden.

Die Ladung der Batterie erfolgt nach einer für den Akkumulatortyp spezifischen Lademethode, wobei die Restkapazität berücksichtigt wird, um eine schonende Ladung sicherzustellen.

Eine Temperaturerfassung wird durchgeführt um beispielsweise eine temperaturgesteuerte Parameteränderung zu veranlassen oder eine Warnung auzulösen, z.B. beim Einsatz im explosionsgeschützten Bereich. Die Temperatur wird außerdem für die Kapazitätsberechnung benötigt und bei der Berechnung der Lebensdauer von Komponenten berücksichtigt.

Im Mikrocontroller 9 sind Lebensdauer-Erwartungswerte für die Batterie 1 und die Glühlampe 3 gespeichert. Durch Erfassung der Betriebsdauer dieser Komponenten, Verknüpfung mit der Temperatur und gebenenfalls weiterer Einflußfaktoren und durch Bezug auf den jeweiligen Lebensdauer-Erwartungswert wird ein voraussichtlicher Lebensdauer-Restwert als Prozentwert für die Batterie 1 im zweiten Anzeigefeld 14.2 der Anzeigeeinrichtung 14 und für die Lampe 3 im dritten Anzeigefeld 14.3 angezeigt.

Weiterhin enthält der Mikrocontroller 9 bekannte Power-Fail-Routinen um bei Ausfall der Stromversorgung Daten zu retten. Weitere programmierte Funktionen sind z.B. Selbsttest der Einrichtung und Eichung des Meßsystems, sowie Verfahren zum Regenerieren und Formieren der Batterie 1 bzw. ihrer Zellen. Außerdem sind mit dem Mikrocontroller 9 Sonderschaltungen realisiert, wie z.B. Blinkschaltungen und Sicherheitsschaltungen.

Im Langzeit-Datenspeicher 19 sind batteriespezifische Daten z.B. 3 oder 5 Jahre lang gespeichert, die über einen wählbaren Erfassungs- oder Bemessungszeitraum, z.B. 3 Monate, erfaßt werden. Solche Daten können z.B. Anzahl der Ladungen, Überladungen, Tiefentladungen und Temperaturüberbeanspruchungen im Bemessungszeitraum sein. Der Langzeit-Datenspeicher 19 ist somit als Batterie-Steckbrief aufzufassen. Die gespeicherten Daten können mit Hilfe der Anzeigeeinrichtung 14 zur Anzeige gebracht werden und z.B. mit Hilfe der Programmier- und Parametrisier-Einrichtung 16 abgerufen werden.

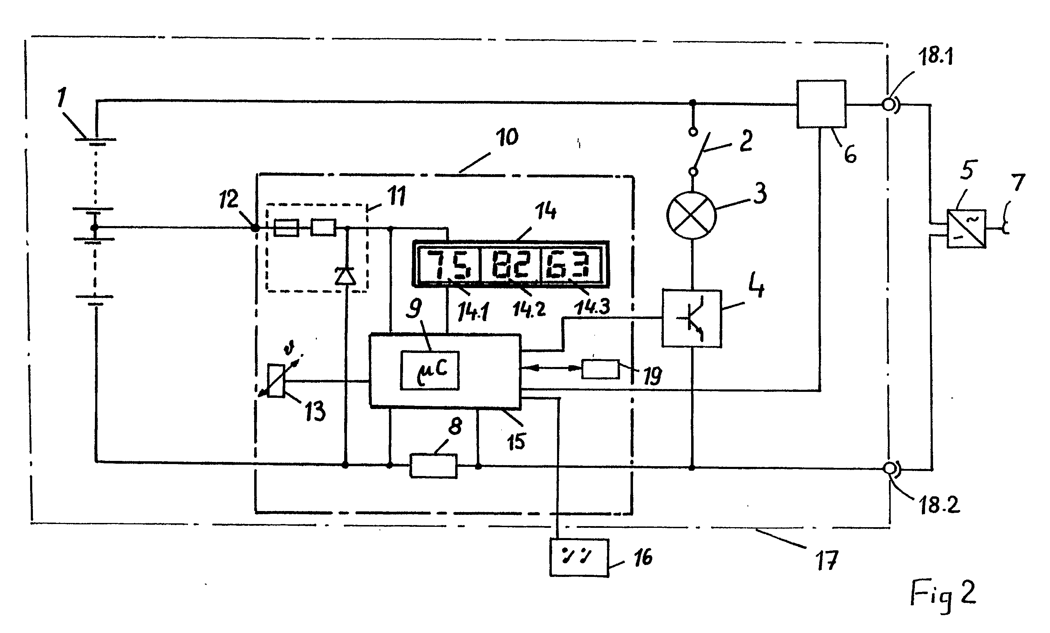

Fig. 2 zeigt eine Ausführungsvariante, bei welcher das relativ schwere Leistungsteil 5 außerhalb einer Leuchte 17 angeordnet und über Ladeanschlüsse 18.1, 18.2 mit der Leuchte 17 verbunden ist. Die Ladesteuerung 6 ist innerhalb der Leuchte 17 angeordnet, so daß keine Informationsübertragung zwischen dem Leistungsteil 5 und der Leuchte erforderlich ist. Die Leuchte 17 bzw. ein sonstiges in solcher Weise ausgeführtes mobiles Gerät kann auch aus einer Batterie, z.B. einer Kraftfahrzeug-Bordbatterie über die Ladeanschlüsse 18.1, 18.2 gespeist werden.

**Patentansprüche**

1.  Steuerungs- und Meßeinrichtung für mobile batteriebetriebene Geräte, dadurch gekennzeichnet, daß die Einrichtung als Modul (10) mit einem Mikrocontroller (9) ausgeführt ist, wobei

    -   dem Mikrocontroller (9) der Batteriespannung, dem Batteriestrom und der Temperatur proportionale Spannungssignale zugeführt sind,
    -   im Mikrocontroller (9) Programme gespeichert sind zur Ermittlung des jeweiligen Ladezustandes und zur Steuerung eines Ladegeräts gemäß einer bestimmten Ladecharakteristik und in Abhängigkeit vom Ladezustand und
    -   der Mikrocontroller (9) Steuerungssignale für eine Ladeeinrichtung (5,6) ausgibt.

2.  Einrichtung nach Anspruch 1, dadurch gekennzeichnet, daß das Modul (10) eine Interface-Einrichtung (15) und eine Schutzbeschaltung (11) enthält.

3.  Einrichtung nach Anspruch 1 oder 2, dadurch gekennzeichnet, daß der Mikrocontroller (9) außerdem ein Programm zur Erfassung der Betriebsdauer der Batterie (1) und zum Vergleich mit einer gespeicherten voraussichtlichen Batterielebensdauer enthält.

4.  Einrichtung nach einem der vorstehenden Ansprüche, dadurch gekennzeichnet, daß das Modul (10) in einer tragbaren Leuchte (17) eingesetzt ist.

5.  Einrichtung nach Anspruch 4, dadurch gekennzeichnet, daß im Mikrocontroller (9) ein Programm zur Erfassung der Lampenbetriebsdauer und zur Verknüpfung mit einer vorgegebenen Lampenlebensdauer gespeichert ist.

6. Einrichtung nach einem der vorstehenden Ansprüche, dadurch gekennzeichnet, daß das Modul eine Anzeigeeinrichtung (14), vorzugsweise eine digitale Anzeige, enthält, welche den Ladezustand der Batterie (1), vorzugsweise die entnehmbare Energie, in Prozent der maximalen speicherbaren Energie anzeigt.

7. Einrichtung nach Anspruch 6, dadurch gekennzeichnet, daß die Anzeigeeinrichtung (14) die zu erwartende Restlebensdauer einzelner Komponenten des Gerätes, wie z.B. der Batterie oder der Lampe (3) einer Leuchte, vorzugsweise mit einem Prozentwert anzeigt.

8. Einrichtung nach einem der vorstehenden Ansprüche, dadurch gekennzeichnet, daß in Mikrocontroller (9) Programme für Sonderfunktionen gespeichert sind, wobei Sonderfunktionen z.B. Blinken einer Lampe, Meldung einer unzulässig hohen Temperatur oder Abschaltung des Verbrauchers bei Batterieunterspannung sind, und das Modul (10) erforderliche Ein- und Ausgänge für Signale zur Ausführung der jeweiligen Sonderfunktion aufweist.

9. Einrichtung nach einem der vorstehenden Ansprüche, dadurch gekennzeichnet, daß der Mikrocontroller (9) ein Programm zur Durchführung einer Selbstüberprüfung der gesamten Steuerungs- und Meßeinrichtung oder einzelner Komponenten enthält.

10. Einrichtung nach einem der vorstehenden Ansprüche, dadurch gekennzeichnet, daß ein Netzteil (5) der Ladeeinrichtung außerhalb des mobilen Gerätes (17) angeordnet und über Ladekontakte (18.1, 18.2) mit dem mobilen Gerät (17) verbunden ist, welches eine Ladesteuerung (6) enthält.

11. Einrichtung nach einem der vorstehenden Ansprüche, dadurch gekennzeichnet, daß der Mikrocontroller (9) mit einem Langzeit-Datenspeicher (19) in Verbindung steht, in dem während eines wählbaren Erfassungszeitraumes erfaßte batteriespezifische Daten gespeichert sind, wie z.B. Anzahl der Batterieladungen, Überladungsfälle, Tiefentladungsfälle und Temperaturüberbeanspruchungen.

Fig 1

Fig 2

EP 0 458 232 A2